(19) Europäisches Patentamt

European Patent Office

Office européen des brevets

(11) **EP 4 446 394 A1**

(12) **EUROPEAN PATENT APPLICATION**

(43) Date of publication:
**16.10.2024 Bulletin 2024/42**

(21) Application number: **23305560.7**

(22) Date of filing: **13.04.2023**

(51) International Patent Classification (IPC):
$C09K\ 8/035^{(2006.01)}$        $C09K\ 8/588^{(2006.01)}$
$C09K\ 8/68^{(2006.01)}$         $C09K\ 8/88^{(2006.01)}$
$C08F\ 220/34^{(2006.01)}$       $C08L\ 33/14^{(2006.01)}$

(52) Cooperative Patent Classification (CPC):
**C09K 8/035; C08F 220/34; C08L 33/14;
C09K 8/588; C09K 8/68; C09K 8/88**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SNF Group
42160 Andrézieux-Bouthéon (FR)**

(72) Inventor: **FAVERO, Cédrick
42160 ANDREZIEUX BOUTHEON (FR)**

(74) Representative: **Cabinet Laurent & Charras
Le Contemporain
50 Chemin de la Bruyère
69574 Dardilly Cedex (FR)**

(54) **NEW COMPOSITION FOR OIL AND GAS RECOVERY**

(57)      The invention relates to a composition for preparing an injection fluid in oil and gas recovery comprising an inverse emulsion of a water-soluble polymer A, and solid particles of a water-soluble polymer B, wherein water-soluble polymer A and water-soluble polymer B comprises cationic monomer and anionic monomer.

EP 4 446 394 A1

**Description**

**FIELD OF THE INVENTION**

The present invention relates to a new composition comprising water soluble polymers for treating a portion of a subterranean formation. The present invention also refers to a method for treating a portion of a subterranean formation and especially to a method for recovering oil and gas, wherein the composition is used. The composition is particularly useful to prepare fracturing fluid in fracturing operations, and injection fluid in Chemical Enhanced Oil Recovery (EOR).

**BACKGROUND**

Water-soluble polymers are widely used in oil and gas recovery processes, such as enhanced oil recovery and hydraulic fracturing operations, but also other stimulation, cementing, drilling operations or completion operations. Water-soluble polymers are generally in solution form, in inverse emulsion form, in powder form, or in dispersion form. Each of them has known advantages and drawbacks.

In the oil and gas industry, there is generally a need for highly concentrated version of polymer composition, easily useable, and hence preferably in liquid form. The document WO 2017/187150 proposes a formulation prepared by mixing a granulated water-soluble friction reducing polymer with an inverse polymer emulsion. This offers a liquid composition that does not require specialized equipment, and which is found to be technically advantageous and cost-effective. More precisely, the composition affords friction reducing performances that matches or surpasses previous friction reducers. The level of friction reduction is higher and reached faster.

In oil and gas operations, fluids that are injected into a subterranean formation may comprise particles or colloids. In that case, the particles or colloids have to be suspended in the fluid in order to avoid any sedimentation and inhomogeneity of the dispersed particles. Viscosifying polymers are generally used for that purpose in injection fluid compositions. However, the injection fluid composition is generally exposed to high shear conditions and the viscosifying polymers which are generally shear thinning do not afford satisfactory results.

There is a need to improve the viscosity and/or the suspensive effect(s) of water-soluble polymers used in oil and gas recovery processes, especially when high shear conditions are encountered.

In fracturing operation, especially when High Viscosity Friction Reducers (HVFR) are used, the dosage of said HVFR is important and there is a need to propose more environmentally friendly solutions such as new products needing less energy to produce and more efficient products to reduce their consumption.

The applicant has developed a new composition made with a combination of specific water-soluble polymers and that offers solutions to the problem above described.

The use of the compositions resulting from the invention is in line with the principle of environmental awareness and the impact of industry and man on the planet. In the present case, the composition leads to a reduction of product consumption thanks to better performances, allowing a reduction of the amount of polymer used, leading to less greenhouse gas emissions such as $CO_2$ associated with polymer production. The good performances of the composition in high salinity brine offer the possibility to recycle brine instead of using fresh water, leading to a diminution of the water consumption.

**SUMMARY OF THE INVENTION**

In a first aspect, the present invention provides a composition for subterranean use comprising:

- an inverse emulsion of a water-soluble polymer A, and
- solid particles of a water-soluble polymer B,

wherein water-soluble polymer A and water-soluble polymer B comprises at least one hydrophilic cationic monomer and at least one hydrophilic anionic monomer.

Thanks to the fine tuning of the composition according to the invention it is possible to reach the environmental goals inherent to new technical innovations. In the present case the composition leads to a reduction of product consumption thanks to better performances. Because cationic monomers tend to have a higher carbon footprint and need more reaction steps to produce, there is a need to decrease the cationic monomer content in the polymer as low as possible, i.e. the cationicity.

The composition of the invention reaches this goal since the average cationicity of the polymers comprised in said composition is lower compared to the current cationic product, due to the use of anionic monomers, thereby leading to amphoteric polymers A and B. Less cationic monomer means generally more acrylamide which is preferably obtained by bioconversion with lower energy consumption.

For all these reasons, the product of the invention is more environmentally friendly. The simultaneous presence of cationic and negative charge in at least one of polymer A and polymer B provide a synergistic effect which allows better friction reduction and suspensive performances than traditional polymers, especially in high salinity brines, i.e. brines with salinities higher than sea water, either in total dissolved salts and/or ion hardness.

In a second aspect, the invention provides an injection fluid for oil and gas recovery process, said fluid being prepared with at least the composition of the invention. The injection fluid may be a polymer flooding injection fluid or a fracturing fluid.

In a third aspect, the present invention provides a method of treating a portion of subterranean formation comprising preparing an injection fluid with at least the composition of the invention, introducing the injection fluid into portion of the subterranean formation.

Treating a portion of a subterranean formation includes treating part of the subterranean formation or treating the entire subterranean formation.

In a fourth aspect, the invention provides a fracturing method comprising preparing a fracturing fluid with at least the composition of the invention and with at least a proppant, introducing the fracturing fluid into portion of the subterranean formation.

In a fifth aspect, the invention provides a polymer flooding method comprising preparing a polymer flooding injection fluid with at least the composition of the invention, introducing the polymer flooding injection fluid into portion or the entire subterranean formation.

In a sixth aspect, the invention provides a method of improving the suspensive properties in an injection fluid comprising preparing an injection fluid by mixing at least the composition of the invention in water, sea water or brine, introducing the injection fluid into portion or the entire subterranean formation. The aqueous treatment fluid may be a fracturing fluid or a polymer flooding injection fluid. In other words, this method consists in improving the suspension of particles or colloids that are present in an injected fluid.

## DETAILED DESCRIPTION OF THE INVENTION

It has been discovered that the use of at least two amphoteric polymer, one resulting from a polymerization in an inverse emulsion and one in solid particles state dispersed the inverse emulsion leads to an improvement of the friction reduction effect and of the suspensive effect, even in high brines, and even in high shear conditions.

The suspensive effect refers to the suspension of particles or colloids that are present in an injection fluid and/or an injected fluid. This corresponds to the capacity that the composition of the invention gives to the injection fluid to suspend particles or colloids such as proppant, and to avoid sedimentation. This property is very important in fracturing operation where proppant such as sand or coated sand are present in the injection fluid to maintain open the fractures, and that allow an efficient recovery of oil and gas.

When the term "polymer A" and "polymer B" is used in the present invention, it respectively corresponds to the water-soluble polymer A and to the water-soluble polymer B.

"Macromonomer" is defined as a polymer or oligomer having one end-group that acts as a monomer molecule, so that each polymer or oligomer contributes only a single monomer to a chain of the product polymer.

By "subterranean" we refer to any use that occurs below the surface of earth. For example, and without limitation, a subterranean use may be drilling an oil well, an enhanced oil recovery process by sweeping a subterranean formation with a polymer solution, a hydraulic fracturing operation, geothermal application, operations to modify the water permeability of an oil well such as conformance operations, or for building or tunnel construction.

By "hydrophilic monomer" we refer to a monomer which has an octanol/water partition coefficient, $K_{ow}$, of less than or equal to 1, wherein the $K_{ow}$ partition coefficient is determined at 25°C in an octanol/water mixture having a volume ratio of 1:1, at a pH of 6 to 8.

By "hydrophobic monomer" we refer to a monomer that has an octanol/water partition coefficient, $K_{ow}$, greater than 1, wherein the $K_{ow}$ partition coefficient is determined at 25°C in an octanol/water mixture having a volume ratio of 1:1, at a pH between 6 and 8.

The octanol/water partition coefficient, $K_{ow}$, represents the ratio of the concentrations (g/L) of a monomer between the octanol phase and the aqueous phase. It is defined as follows:

$$K_{ow} = \frac{[monomer]_{octanol}}{[monomer]_{water}}$$

As used herein, the term "water-soluble polymer" refers to a polymer which gives an aqueous solution substantially without insoluble particles when 10 g/l are appropriately mixed with water at 25°C.

As used herein, the "cationicity" of a polymer is the percentage of cationic monomer in mol% based on the total amount of monomer in the polymer. For instance, the cationicity of a polymer of 40 mol% cationic monomer, 30 mol% anionic monomer and 30 mol% zwitterionic monomer is 70 mol%.

By "X and/or Y" is meant "X", or "Y", or "X and Y".

Also included in the invention are all possible combinations of the various disclosed embodiments, whether they are preferred or exemplary embodiments. In addition, where ranges of values are indicated, the terminals are part of these ranges. The disclosure also includes all combinations between the bounds of those value ranges. For example, the value ranges "1-20, preferably 5-15", involve disclosure of the ranges "1-5", "1-15", "5-20" and "15-20" and the values 1, 5, 15 and 20.

In the present invention, the "weight average molecular weight", also called molecular weight in the invention, is determined by the intrinsic viscosity, and expressed in g/mol. The intrinsic viscosity can be measured by methods known to the skilled person and especially can be calculated from the values of reduced viscosity for different concentrations by a graphical method consisting of plotting the reduced viscosity values (on the ordinate axis) against the concentrations (on the abscissa axis) and extrapolating the curve to zero concentration. The intrinsic viscosity value is read off the ordinate axis or by using least square method. Then the weight average molecular weight can be determined by the well-known Mark-Houwink equation:

$$[\eta] = K\, M^{\alpha}$$

$[\eta]$ represents intrinsic viscosity of the polymer determined by solution viscosity measuring method,

K represents an empiric constant,

M represents molecular weight of the polymer,

$\alpha$ represents the Mark-Houwink coefficient,

$\alpha$ and K, depend on the particular polymer-solvent system.

The composition of the invention

The specificity of the invention is to combine an inverse emulsion of a water-soluble polymer A and solid particles of a water soluble-polymer B, wherein polymer A and polymer B comprises cationic monomer and anionic monomer.

According to a first aspect, the present invention provides a composition for preparing an injection fluid in oil and gas recovery comprising:

- an inverse emulsion of a water-soluble polymer A; and
- solid particles of a water-soluble polymer B;

wherein both water-soluble polymer A and water-soluble polymer B comprises at least one hydrophilic cationic monomer and at least one hydrophilic anionic monomer.

As such, both water-soluble polymer A and water-soluble polymer B are amphoteric polymers.

The polymer A and the polymer B may be different or identical, but both are amphoterics, and their form is different, polymer A being in water in oil emulsion form, and polymer B being in particles form (powder or fines or granules or beads).

Polymer A is advantageously different from polymer B. By different, we mean that they differ at least in view of their respective molar compositions (amount of hydrophilic cationic monomers and/or hydrophilic anionic monomers) and/or in view of their respective monomeric compositions and/or in view of their respective molecular weights.

Polymer A and polymer B are advantageously two distinct polymers. By distinct polymers, we mean that they have different molar compositions and different molecular weights; however, in that case, they can have the same monomeric composition. It has been found that, in such a situation, the friction reduction and suspensive performances are optimal.

Advantageously, the water-soluble polymer A comprises (1) between 5 and 50 mol% of hydrophilic cationic monomer, preferably between 10 and 40 mol%, more preferably between 12 and 35 mol%, even more preferably between 15 and 30 mol%, even more preferably between 15 and 25 mol%, even more preferably between 18 and 23 mol%, and (2) between 1 and 50 mol% of hydrophilic anionic monomer , more preferably between 2 and 40 mol%, even more preferably between 3 and 35 mol%, even more preferably between 5 and 30 mol%, optionally (3) the remaining monomer composing the water-soluble polymer A being chosen from non-ionic(s) monomer(s) and/or zwitterionic(s) monomer(s) and/or hydrophobic(s) monomer(s).

In a preferred embodiment, water-soluble polymer A has a molar ratio between the hydrophilic(s) cationic(s) monomer(s) and the hydrophilic(s) anionic(s) monomer(s) from 3 to 1, preferably from 1 to 1.

Advantageously, the water-soluble polymer B comprises (1) between 1 and 50 mol% of hydrophilic cationic monomer, preferably between 5 and 40 mol%, more preferably between 10 and 30 mol%, more preferably between 15 and 25 mol%, and (2) between 5 and 50 mol% of hydrophilic anionic monomer , more preferably between 10 and 40 mol%, even more preferably between 15 and 30 mol%, optionally (3) the remaining monomer composing the water-soluble polymer A being chosen from non-ionic(s) monomer(s) and/or zwitterionic(s) monomer(s) and/or hydrophobic(s) monomer(s).

In a preferred embodiment, polymer B has a molar ratio between the hydrophilic(s) cationic(s) monomer(s) and the hydrophilic(s) anionic(s) monomer(s) from 1 to 1, preferably from 1 to 3.

In a preferred embodiment, the ratio between

- the molar ratio between the hydrophilic(s) cationic(s) monomer(s) and the hydrophilic(s) anionic(s) monomer(s) of polymer A is more than 1, and
- the molar ratio between the hydrophilic(s) cationic(s) monomer(s) and the hydrophilic(s) anionic(s) monomer(s) of polymer B is less than 1.

This means that the cationicity in mol% of polymer A is greater than the cationicity in mol% of polymer B. The cationicity in mol% of polymer A is preferably at least 5% more than the cationicity in mol% of polymer B, preferably at least 10% greater, more preferably at least 15% greater. For example, if the cationicity of polymer A is 25 mol%, the cationicity of polymer B is preferably 20 mol%, more preferably 15 mol% or less.

The water-soluble polymer A according to the invention has advantageously an average molecular weight by weight comprised between 2 million g/mol and 30 million g/mol, preferably higher than 4 million g/mol, more preferably higher that 6 million g/mol, even more preferably higher than 8 million g/mol.

The water-soluble polymer B according to the invention has advantageously an average molecular weight by weight comprised between 2 million g/mol and 30 million g/mol, preferably higher than 5 million g/mol, more preferably higher that 8 million g/mol, even more preferably higher than 10 million g/mol.

In a preferred embodiment, the average molecular weight by weight of water-soluble polymer A is lower than the average molecular weight by weight of water-soluble polymer B, preferably 5% lower, more preferably 10% lower, even more preferably 15% lower. For example, if the molecular weight of polymer B is 10 million g/mol, the molecular weight of polymer A is preferably 9.5 million g/mol or less, more preferably 9 million g/mol or less, even more preferably 8.5 million g/mol or less.

Advantageously It has been found that when polymer A is more cationic and has a lower molecular weight than polymer B (or vice versa: the same applies to polymer B vs polymer A), the friction reduction and suspensive performances are optimal. Without wishing to be bound by any theory, it seems that the lowest molecular weight polymer, between polymer A and B, is less sensible to mechanical degradation during the initial phase of injection when friction reducing effect is needed, while the other polymer (the highest molecular weight and lowest cationic polymer) exhibits optimal performances (suspensive effect with time delay) later in the subterranean formation. This optimal configuration allows a very good compromise between drag reduction effect and suspensive effect.

The composition is in liquid form even if it contains dispersed solid particles. The composition is therefore easily transportable, dispersible, pumpable, stable to storage, which facilitates its use in oil and gas recovery conditions.

The composition is obtained by mixing appropriately the inverse emulsion of polymer A with solid particles of polymer B obtained according to the invention. The mixture is preferably made by dispersing the solid particles in the inverse emulsion. Any appropriate mean can be used to make the mixture such as blender, rotor/stator mixer, batch stirrer, disperser, Polymer Slicing Unit (PSU) such as described in the document US 8,186,871.

Even if not preferred, solid particles of polymer B may also be pre-wetted with an oil similar or different than the one used in the inverse emulsion of polymer A, or in a brine, generally at a concentration from 40% to 80% by weight of solid particles (polymer B) related to the total amount of liquid (pre-wetting liquid) and solid particles (polymer B). The pre-wetting composition contains oil or brine and may contain surfactant(s) and other ingredients.

According to the invention, the solid particles of polymer B remain in solid state in the composition of the invention. In other terms, polymer B is in solid state and dispersed in the composition while polymer A is in the hydrophilic droplets of the water-in-oil emulsion. The polymer B may absorb part or all of the free water of the inverse emulsion (of polymer A) and be pre-swollen but remains in solid state. Solid state includes these pre-wetted and pre-swollen states.

In practice, in oil and gas recovery process, the composition of the invention is mixed with an aqueous medium such as water, sea water or brine to form the injection fluid. When the composition is appropriately mixed with a sufficient amount of aqueous medium, the inverse emulsion is inverted, and the polymer A is rapidly released, whereas the polymer B starts to dissolve more slowly in the aqueous medium, even if pre-swollen.

In the composition of the invention, the weight ratio between the inverse emulsion of polymer A and the solid particles of polymer B is advantageously comprised between 1:1 and 10:1, preferably between 6:1 and 2:1.

In the composition of the invention, the total concentration of polymer A and polymer B (A+B) is advantageously comprised between 30 wt% (weight percent) and 80 wt%, preferably between 37 wt% and 70 wt%, more preferably between 40 wt% and 65 wt%, based on the total weight of the composition.

The composition according to the invention may also comprise other components such as natural thickener such as clay, or synthetic thickener, salts, alkaline agent, surfactant such as the one used in the inverse emulsion or others, biocides, corrosion inhibitor, acids, scale inhibitors, clay swelling inhibitor, guar, guar derivatives, carboxymethyl cellulose, crosslinkers such as zirconium, titanate or borate compounds, delayed crosslinkers.

In the present invention, a particular attention is paid to the rheological analysis of the injection fluids in which the composition of the invention is used. The measurement of different rheological parameters is conducted according to the method described below.

1) Flow curve

Using an Anton Paar MCR302 rheometer equipped with RheoCompass software and a Cone-Plan measurement system (50mm-2°), the viscosity as a function of the shear gradient is measured. The normal force is reset after loading and unloading the sample. The shear gradient range can range from 0.001 to 500 s-1 for a temperature of 25 ° C.

The curve obtained is then modeled by the Carreau-Yasuda equation, allowing to recover the Newtonian viscosity ($\eta0$ in cps), the relaxation time ($\tau$ in sec.) And the flow index (n, flow index). The adjustment value "a" being considered equal to 2.

$$\eta = 1 + (\eta_0 - 1).(1 + (\tau.\dot{\gamma})^a)^{\frac{n-1}{a}}$$

During the measurement of the flow curve, parameter N1 is also recorded. It corresponds to the first difference of the normal stresses and increases as the shear gradient increases in the viscoelastic materials. It is the manifestation of the Weissenberger effect. N1 is equal to 0 for an isotropic fluid at rest and is never negative.

2) Oscillatory measurement

In order to determine the linearity range of the material, the elastic modulus G' and loss G" are recorded at 1 Hz for deformations ranging from 0.1 to 100%. The response of the device remained linear up to 10% in general.

In order to realize the frequency sweep of the material, G' and G" are measured from 10 to 0.001 Hz for a deformation comprised in the linear domain, generally 1%.

When measurable, the point of intersection between G' and G" is used to determine the viscoelastic relaxation time according to the following formula:

$$\tau_{osc.} = \frac{1}{2\pi.f_{G'=G''}}$$

3) Calculation

In order to discriminate the products between them, it is possible to evaluate these sand suspension performances statically, by the calculation of the sedimentation velocity, and dynamically, by the calculation of $\lambda e / v$.

a) Calculation of the sedimentation rate

The calculation of the sand sedimentation rate in a viscoelastic fluid is described in the literature (without being exhaustive: SPE 187255, SPE16221) and is based on the following formula:

$$v_p = \left(\frac{2^n g \Delta \rho}{9K}\right)^{\frac{1}{n}}.d^{\frac{n+1}{n}}$$

wherein

g: the acceleration of gravity (9.81 m / s$^2$),

Δρ: the difference in density between sand and fluid (: 1650 kg / m$^3$),
d: the diameter of the sand particle (0.86 mm /1) example),
K: the consistency index and n: flow index.

Here we forget the phenomena of sticking and wall which can strongly impact the sedimentation rate and we use this parameter to make a classification between the products.

b) Calculation of λe / v

The dimensionless number λe / v is used to determine the capacity of the fluid to suspend sand under shear. This number depends on the following rheological parameters:

$$\lambda_{e/v} = \frac{0.5.c.\tau_{osc.}N_1(\dot{\gamma})}{\eta(\dot{\gamma})}$$

With c: constant (: 1).
When the value is greater than 1 the system is dominated by elastic forces ensuring good suspension capabilities.

Inverse emulsion of water-soluble polymer A

The water-soluble polymer A comprises at least one hydrophilic cationic monomer and at least one hydrophilic anionic monomer.
Advantageously, the hydrophilic cationic monomer or monomers are chosen from monomers derived from vinyl-type (advantageously acrylamide, acrylic, allylic or maleic), these monomers having a phosphonium or tertiary ammonium or quaternary ammonium function. In particular and in a non-limiting manner, we can mention diallyldialkyl ammonium salts such as diallyl dimethyl ammonium chloride (DADMAC); salified or quaternized salts of dialkyl-aminoalkylacrylamides ; salified or quaternized salts of dialkyl-aminoalkylmethacrylamides, such as methacrylamido-propyl trimethyl ammonium chloride (MAPTAC), acrylamido-propyl trimethyl ammonium chloride (APTAC) salified or quaternized salts of dialkyl aminoalkyl acrylate such as salified or quaternized dimethylaminoethyl acrylate, salified or quaternized salts of dialkyl aminoalkyl methacrylate such as salified or quaternized dimethylaminoethyl methacrylate and mixtures thereof. Advantageously, the alkyl groups are C$_1$-C$_3$. Preferably, the hydrophilic(s) cationic(s) monomer(s) is quaternized. Preferably, the hydrophilic cationic monomer is salified or quaternized dimethylaminoethyl acrylate, preferably quaternized.
The skilled person in the art knows how to prepare the quaternized monomers, for example by means of quaternizing agent of the R-X type, R being an alkyl group and X being a halogen or a sulfate. The quaternizing agent may be selected from dialkyl sulfates comprising from 1 to 6 carbon atoms or alkyl halides comprising from 1 to 6 carbon atoms. Preferably, the quaternizing agent is selected from methyl chloride, benzyl chloride, dimethyl sulfate or diethyl sulfate. In addition, the present invention also covers DADMAC, APTAC and MAPTAC monomers in which the counterion is a sulfate, fluoride, bromide or iodide instead of chloride.
By "quaternizing agent" we mean a molecule that can alkylate a tertiary amine.
The water-soluble polymer A may contain different hydrophilic cationic monomer types, for example DMAEA and DMAEMA, but contains preferably one cationic monomer type.
Advantageously, the hydrophilic anionic monomer(s) are chosen from monomers having vinyl functions (preferably acrylic, maleic, fumaric, malonic, itaconic, or allylic), and contain a carboxylate, phosphonate, phosphate, sulfate, sulfonate, or other anionically charged group. Examples of suitable monomers include acrylic acid; methacrylic acid; dimethylacrylic acid; itaconic acid; crotonic acid; maleic acid; fumaric acid; acrylamido undecanoic acid; 3-acrylamido 3-methylbutanoic acid; maleic anhydride; strong acid type monomers having for example a sulfonic acid or phosphonic acid function such as vinylsulfonic acid, vinylphosphonic acid, allylsulfonic acid, methallylsulfonic acid, 2-methylidenepropane-1, 3-disulfonic acid, 2-sulfoethylmethacrylate, sulfopropylmethacrylate, sulfopropylacrylate, allylphosphonic acid, styrene sulfonic acid, 2-acrylamido-2-methylpropane sulfonic acid (ATBS), 2-acrylamido-2-methylpropane disulfonic acid; water-soluble salts of these monomers such as their alkali metal, alkaline earth metal, or ammonium salts; and mixtures thereof. They also include hemi esters of maleic acid or itaconic acid, and salts thereof. Preferably, the hydrophilic anionic monomer(s) are selected from the group consisting of acrylic acid, methacrylic acid, 2-acrylamido-2-methylpropane sulfonic acid, their salts and mixtures thereof.
In a particular mode, the hydrophilic anionic monomer(s) may be salified. Alternatively, it may be a mixture of an acid form and a salified form, for example a mixture of acrylic acid and acrylate.

By salified, it is meant that at least one acidic function of the water-soluble anionic monomer is replaced with a salt that neutralizes the negative charge of the acidic function. In other words, the non-neutralized (non-salified) form corresponds to the acidic form of the monomer, e.g. R-C(=O)-OH in the case of the carboxylic acid function, whereas the neutralized form of the monomer corresponds to the R-C(=O)-O⁻ M⁺ form, where M⁺ is a counterion (e.g. a metal salt or ammonium) of positive charge. The neutralization of the acid functions of the polymer can be partial or total.

The salified form advantageously corresponds to salts of alkali metals (Li, Na, K...), alkaline earth metals (Ca, Mg...) or ammonium (e.g. the ammonium ion or a tertiary ammonium). Preferred salts are sodium salts.

The salification can be done before, during or after the polymerization.

The water-soluble polymer A may also contain monomers such as hydrophilic non-ionic monomer(s) and/or hydrophilic zwitterionic monomer(s) and/or hydrophobic monomer(s) or hydrophobic macromonomer(s).

Advantageously, the hydrophilic non-ionic monomer(s) are selected, in particular, from the group comprising water-soluble vinyl monomers, such as acrylamide, methacrylamide, N-alkylacrylamides, N-alkylmethacrylamides, N,N-dialkyl acrylamides (e.g. N,N-dimethylacrylamide or N,N-diethylacrylamide), N,N-dialkylmethacrylamides, alkoxylated esters of acrylic acid alkoxylated esters of methacrylic acid, N-vinylpyrrolidone, N-methylolacrylamide, N-vinylformamide (NVF), N-vinylacetamide, N-vinylimidazole, N-vinylsuccinimide, acryloylmorpholine (ACMO), acryloylchloride glycidyl methacrylate, glyceryl methacrylate, diacetone acrylamide, hydroxyalkyl (meth)acrylate, aminoalkyl (meth)acrylate, thioalkyl (meth)acrylate, hydroxyalkylacrylates, hydroxyalkyl methacrylates, and mixtures thereof. Among these non-ionic monomers, the alkyl groups are advantageously $C_1$-$C_5$, more advantageously $C_1$-$C_3$. They are preferably linear alkyls. Preferably, the hydrophilic non-ionic monomer(s) are selected from the group consisting of acrylamide, methacrylamide, N-vinylpyrrolidone and N-vinylformamide, most preferably it is acrylamide.

Advantageously, the hydrophilic zwitterionic monomer(s) is a derivative of a vinyl (particularly an acrylamide, acrylic, allylic or maleic ), this monomer having an amine or quaternary ammonium function and a carboxylic acid (or carboxylate), sulphonic acid (or sulphonate) or phosphoric acid (or phosphate or phosphonate). The dimethylaminoethyl acrylate derivatives, such as 2 - ((2- (acryloyloxy) ethyl) dimethylammonio) ethane-1-sulfonate, may be mentioned in particular and in a non-limiting manner, the 3 - ((2-(acryloyloxy) ethyl) dimethylammonio) propane-1-sulfonate, 4 - ((2-(acryloyloxy) ethyl) dimethylammonio) butane-1-sulfonate, [2- (acryloyloxy) ethyl] (dimethylammonio) acetate, methacrylate derivatives of dimethylaminoethyl such as 2 - ((2- (methacryloyloxy) ethyl) dimethylammonio) ethane-1-sulfonate, 3 - ((2- (methacryloyloxy) ethyl) dimethylammonio) propane-1-sulfonate, 4 - ((2 - (methacryloyloxy) ethyl) dimethylammonio) butane-1-sulfonate, [2- (methacryloyloxy) ethyl] (dimethylammonio) acetate, dimethylamino propylacrylamide derivatives such as 2 - ((3-acrylamidopropyl) dimethylammonio) ethane-1-sulfonate, 3 - ((3-acrylamidopropyl) dimethyl-lammonio) propane-1-sulfonate, 4 - ((3-acrylamidopropyl) dimethylammonio) butane-1-sulfonate, [3- (acryloyl) oxy) propyl] (dimethylammonio) acetate, dimethylamino propyl methylacrylamide derivatives such as 2 - ((3-methacrylamido-propyl) dimethylammonio) ethane-1-sulfonate, 3 - ((3-methacrylamidopropyl) dimethylammonio) propane-1-sulfonate 4 - ((3-methacrylamidopropyl) dimethylammonio) butane-1-sulfonate and [3- (methacryloyloxy) propyl] (dimethylammonio) acetate.

The water-soluble polymer A may also contain at least one hydrophobic monomer or at least one hydrophobic macromonomer. The concentration of hydrophobic monomers and hydrophobic macromonomers in mol% based on the total monomer and macromonomer content is advantageously comprised between 0.0001% and 10%, preferably between 0.001% and 5%, more preferably between 0.01% and 3%, even more preferably between 0.1 and 2%, even more preferably between 0.2 and 1.5%, even more preferably 0.3 and 1.3%.

When the water-soluble polymer A comprise hydrophobic monomer(s) or hydrophobic macromonomer(s) their quantity is adjusted so that the polymer remains soluble in water.

The water-soluble polymer A preferably comprises acrylamide. The concentration of acrylamide based on the total monomer and macromonomer content is advantageously comprised between 0 and 94 mol%, preferably between 30 and 85 mol%, more preferably between 47 and 77 mol%.

In a preferred embodiment, the water-soluble polymer A is a polymer of dimethylaminoethyl acrylate salified or quaternized, and acrylic acid and/or its salts, and/or 2-acrylamido-2-methylpropane sulfonic acid (ATBS) and/or its salts. In this case the amount of dimethylaminoethyl acrylate salified or quaternized, is advantageously comprised between 5 and 40 mol%, preferably between 10 and 30 mol% and the amount of acrylic acid and/or its salts, and/or 2-acrylamido-2-methylpropane sulfonic acid (ATBS) and/or its salts is advantageously comprised between 1 and 40 mol%, preferably between 5 and 30 mol%, preferably between 5 and 20 mol%.

In another preferred embodiment, the water-soluble polymer A is a polymer of dimethylaminoethyl acrylate salified or quaternized, acrylamide, acrylic acid and/or its salts, and/or 2-acrylamido-2-methylpropane sulfonic acid (ATBS) and/or its salts. In this case the amount of dimethylaminoethyl acrylate salified or quaternized, is advantageously comprised between 5 and 40 mol%, preferably between 5 and 30 mol%, preferably between 10 and 20 mol%, the amount of acrylic acid and/or its salts, or 2-acrylamido-2-methylpropane sulfonic acid (ATBS) and/or its salts is comprised between 1 and 40 mol%, preferably between 5 and 30, and the amount of acrylamide is the complement to reach a total amount of 100%.

The person skilled in the art will be able to adjust the respective amounts of monomers and macromonomers of polymers A to reach 100 mol%.

Thanks to the specific monomeric composition of polymer A in inverse emulsion form, in combination with the solid particles of polymer B, the composition of the invention offers optimal performances in terms of friction reduction effect and suspensive effect.

The polymerization of polymer A is generally a radical polymerization. By radical polymerization, we include radical polymerization by means of UV, azo, redox or thermal initiators as well as controlled radical polymerization (CRP) techniques or Reversible Chain Transfer by addition-Fragmentation (RAFT) or MADIX polymerization techniques. According to a very preferred embodiment, polymer A is obtained by RAFT polymerization or CRP or MADIX polymerization techniques.

An inverse emulsion, otherwise known as a water-in-oil emulsion, is composed of an oily phase, generally a lipophilic solvent or an oil, which constitutes the continuous phase, in which water droplets comprising a polymer (or monomers before their polymerization) are in suspension, these water droplets forming a dispersed phase. An emulsifying surfactant (called a water-in-oil surfactant) which is placed at the water / oil interface stabilizes the dispersed phase (water + polymer) in the continuous phase (lipophilic solvent or oil).

The inverse emulsion of water-soluble polymer A can be prepared according to any process known by the person skilled in the art. Generally, an aqueous solution comprising the monomer(s) is emulsified in an oil phase comprising at least one emulsifying agent(s). Then, the polymerization is initiated by the addition of a free radical initiator. Reference may be made to redox couples, comprising cumene hydroperoxide, tertiary butylhydroxyperoxide or persulfates among the oxidizing agents, sodium sulfite, sodium metabisulfite and the Mohr salt among the reducing agents. Azo compounds such as 2,2'-azobis(isobutyronitrile) and 2,2'-azobis(2-amidinopropane) hydrochloride can also be used.

The inverse emulsion of water-soluble A is advantageously prepared according to a process comprising the following steps:

a) Preparing an aqueous phase comprising at least one hydrophobic cationic monomer (and/or macromonomer) and at least one hydrophobic anionic monomer (and/or macromonomer) and optionally other monomers and/or macromonomers,

b) Preparing an oily phase comprising at least one oil and at least one water-in-oil surfactant,

c) Mixing the aqueous phase and the oily phase to form a water in oil emulsion,

d) Once the water in oil emulsion is formed, polymerizing under substantially oxygen free conditions the monomers of the aqueous phase with at least one free radical polymerization initiator system,

e) At the end of the polymerization, obtaining an inverse emulsion of polymer,

f) Optionally, and advantageously diluting or concentrating by distillation said inverse emulsion,

g) Optionally, performing a post treatment on the polymer of said inverse emulsion.

Optional step f) may be carried out before or after step g). Preferably step f) is carried out after step g). Mixing step c) is preferably carried out under high shear.

First specific and preferred embodiment of the inverse emulsion of the water-soluble polymer A

According to a first specific and preferred embodiment, the inverse emulsion of water-soluble A is obtained by first obtaining an inverse emulsion, then diluting said inverse emulsion with an aqueous solution to obtain a diluted inverse emulsion. Said diluted inverse emulsion is then combined with solid particles of polymer B to afford the composition of the invention.

Before dilution, the inverse emulsion of polymer A advantageously comprises from 5 to 55% by weight of oil, based on the total weight of the inverse emulsion, preferably from 15 to 45% by weight.

In this preferred embodiment, the dilution rate is advantageously comprised between 2.5% and 20% by weight, based on the total weight of the inverse emulsion obtained at the end of polymerization, preferably between 3 and 15 wt%, more preferably between 3 and 10 wt%. The dilution rate represents the weight of the aqueous solution (aqueous phase) based on the weight of the inverse emulsion obtained at the end of polymerization.

The aqueous solution used for the dilution may be water or a brine, preferably a brine.

Even if the composition of the invention already provides improved viscosifying and suspensive effects, the additional step of diluting the inverse emulsion with an aqueous solution (water of brine) according to this preferred embodiment further improves the performances in terms of viscosifying effect and suspensive effect.

Second specific and preferred embodiment of the inverse emulsion of the water-soluble polymer A

According to a second specific and preferred embodiment, the inverse emulsion of water-soluble A is obtained by polymerization carried out partially or totally at a pressure advantageously comprised between 0.1 and 200 mbar (1 bar = $10^5$ Pa), preferably between 5 and 150 mbar, more preferably between 20 and 100 mbar.

Even if the composition of the invention already provides improved viscosifying and suspensive effects as compared to the compositions of the prior art, the polymerization at a certain level of vacuum of the inverse emulsion further improves the performances in terms of viscosifying effect and suspensive effect.

According to the specific and preferred embodiment, when the polymerization of the inverse emulsion of water-soluble polymer A is carried out partially at a pressure of less than 200 mbar, the duration of this polymerization at reduced pressure represents advantageously at least 10% of the overall duration of the polymerization, preferably at least 30%, more preferably more than 50%, even more preferably more than 80%. In a preferred embodiment, the polymerization is fully conducted at a pressure of less than 200 mbar.

The polymerization is preferably conducted batch wise. In an industrial perspective, it is preferable to produce large batches, but it is generally difficult to increase the batch volume. When the polymerization (10% to 100% of the whole duration) is carried out at a pressure of less than 200 mbar, it has been found that the volume of batch polymerization can be more than 10 $m^3$, preferably higher than 20 $m^3$, and more preferably greater than 40 $m^3$.

When the polymerization is carried out partially or totally at a pressure from 0.1 to 200 mbar, in practice, steps a), b), and c) are carried out at atmospheric pressure, and the pressure is lowered to a value at least below 200 mbar throughout all or part of the duration of the polymerization, preferably during the whole duration of the polymerization. Additional steps of degassing with nitrogen and of increasing to the reaction temperature may be added to the steps described previously.

At the end of the polymerization, the reactor is reset to atmospheric pressure to discharge the water in oil emulsion. It is also possible to maintain a pressure below 200 mbar during step a), and/or step b) and/or step c), and/or during the discharge and/or during the storage of the inverse emulsion.

The means for lowering the pressure are all known means, without this being limited. Examples that may be mentioned include positive displacement pumps such as liquid ring pumps or diaphragm pumps, momentum transfer pumps, regenerative pumps, entrapment pumps, steam ejectors.

The polymerization is preferably carried out in a reactor capable of maintaining a low pressure which is preferable for the process. A condenser may also be advantageously used to remove water and/or a blend of volatiles or oil from the exhaust gas pulled from the emulsion during polymerization under low pressure or vacuum.

The polymerization is generally initiated after depressurizing the reactor but may also be initiated before or during the pressure reduction step. The depressurization step generally lasts a few seconds, or even a few minutes, depending on the volume of the reactor, and depending on the equipment used to achieve the vacuum.

According to one particular embodiment, the following steps are successively performed:

- steps a), b) and c) are made at atmospheric pressure, and include nitrogen sparging,
- the pressure is lowered,
- the polymerization of step d) is initiated.

In another embodiment, the following steps are successively performed:

- steps a), b) and c) are made at atmospheric pressure, and include nitrogen sparging,
- simultaneously, the pressure is lowered, and the polymerization is initiated.

In another embodiment, the following are successively performed:

- steps a), b) and c) are made at atmospheric pressure, and include nitrogen sparging,
- the polymerization is initiated,
- the pressure is lowered during the polymerization.

In a preferred embodiment, the exhaust gas formed during polymerization under vacuum and consisting of a mix of water and oil is not returned to the polymerization mass but condensed using a condenser and removed from the inverse emulsion of polymer A.

General description of the inverse emulsion of the water-soluble polymer A

Generally, at least one inverting agent is added at the end of the polymerization reaction, preferably at a temperature below 50°C.

Conventionally, the polymerization is generally carried out isothermally, adiabatically or at controlled temperature. That is to say the temperature is preferably kept constant, generally between 10 and 60°C (isotherm), or else the temperature is left to increase naturally (adiabatic) and in this case the reaction is generally begun at a temperature below 10°C and the final temperature is generally above 50°C, or, finally, the temperature increase is controlled so as to have a temperature curve between the isotherm curve and the adiabatic curve.

The initial temperature of polymerization is advantageously comprised between 0.1 and 40°C, preferably between 10 and 30°C. The final polymerization temperature is advantageously comprised between 20°C and 90°C, preferably between 35°C and 70°C.

The duration of polymerization is advantageously less than 24 hours, preferably less than 10 hours, more preferably less than 8 hours.

The same additional monomers, branching agent, free radical chain transfer agent as described above may be used to prepare polymer A.

According to the invention, water-soluble polymer A may have a structure which is a linear branched, star, comb, block, or microblock structure and/or a controlled polydispersity in molecular weight. These properties can be obtained by selecting the initiator, the optional transfer agent, the polymerization technique such as the template polymerization, the controlled radical polymerization known as RAFT (reversible chain transfer by addition-fragmentation), NMP (Nitroxide Mediated Polymerization) or ATRP (Atom Transfer Radical Polymerization) or MADIX (macromolecular design by interchange of xanthate) type polymerization, the incorporation of structural monomers and/or the concentration of monomers. The general knowledge of the skilled person allows him or her to prepare a water-soluble polymer having one of these types of structure. Polymer A according to the invention, whatever its specific morphology, remains water soluble.

The oil used to prepare the inverse emulsion of the invention may be a mineral oil, a vegetal oil, a synthetic oil or a mixture of several of these oils. Examples of mineral oil include mineral oil containing saturated hydrocarbons of aliphatic, naphtenic, paraffinic, isoparaffinic, cycloparaffinic or naphthyl type. Examples of synthetic oil include hydrogenated polydecene or hydrogenated polyisobutene; an ester such as octyl stearate or butyl oleate. Exxsol® products range from Exxon are suitable oil.

In general, the weight ratio of the aqueous phase to the oil phase during the polymerization is advantageously from 50/50 to 90/10, preferably 70/30 to 80/20.

The inverse emulsion of polymer A advantageously comprises from 5 to 55% by weight of polymer A, preferably from 15 to 45% by weight, more preferably from 5 to 35% by weight. Generally, when the inverse emulsion is concentrated by distillation, the concentrated inverse emulsion comprises advantageously from 44% to 60% by weight of polymer A, preferably from 51 to 58% by weight.

The inverse emulsion of polymer A advantageously comprise a surfactant generally having a HLB value greater than 10, also called inverting agent.

Hydrophilic-Lipophilic Balance (HLB) of a chemical compound is a measure of the degree to which it is hydrophilic or lipophilic, determined by calculating values for the different regions of the molecule, as described by Griffin in 1949.

In the present invention, we adopted the method of Griffin based on calculating a value based on the chemical groups of the molecule. Griffin assigned a dimensionless number between 0 and 20 to give information on water and oil solubility. Substances with an HLB value of 10 are distributed between the two phases so that the hydrophilic group (Molecular weight Mh) projects completely into the water while the hydrophobic hydrocarbon group (Molecular mass Mp) is adsorbed in the non-aqueous phase.

The HLB value of a substance with a total molecular weight M and a hydrophilic portion of a molecular weight Mh is given by:

$$HLB = 20 \, (Mh \, / \, M)$$

By way of example of such inverting agent, reference may be made to ethoxylated sorbitan esters such as sorbitan oleate ethoxylated with 20 equivalents of ethylene oxide (EO 20), sorbitan laurate polyethoxylated with 20 mol of ethylene oxide, castor oil polyethoxylated with 40 mol of ethylene oxide, decaethoxylated oleodecyl alcohol, heptaethoxylated lauryl alcohol, or sorbitan monostearate polyethoxylated with 20 mol of ethylene oxide. Inverting agent may also be polyoxyethylene alkyl phenol; polyoxyethylene (10 moles) cetyl ether; polyoxyethylene alkyl-aryl ether; quaternary ammonium derivatives; potassium oleate; N-cetyl-N-ethyl morpholinium ethosulfate; sodium lauryl sulfate; condensation products of higher fatty alcohols with ethylene oxide, such as the reaction product of oleyl alcohol with 10 ethylene oxide ; condensation products of alkylphenols and ethylene oxide, such as the reaction products of isooctylphenol with 12 ethylene oxide ; condensation products of higher fatty acid amines with five, or more, ethylene oxide ; ethyleneoxide tristerylphenol; ethylene oxide condensation products of polyhydric alcohol partial higher fatty esters, and their inner anhydrides (e.g., mannitol anhydride, and sorbitol-anhydride); amine oxide; an alkyl polyglucoside; a glucamide; an ester phosphate or an alkylbenzene sulfonic acid salt; hydrosoluble polymeric surfactant.

In a preferred embodiment, the inverting agent is an ethoxylated nonylphenol, advantageously having 4 to 10 ethoxylation, an ethoxy/propoxy alcohol, preferably having $C_{12}$ to $C_{25}$ ethoxy/propoxylation, or a tridecylic alcohol ethoxylated, or an ethoxy/propoxy fatty alcohol, or an ethoxy/propoxy castor oil.

The inverse emulsion of polymer A may contain at least two inverting agents, preferably at least three inverting agents, even more preferably at least four inverting agents.

The inverse emulsion of polymer A advantageously comprise a surfactant generally having a HLB value of less than 10, also called emulsifying agent.

By way of example of such emulsifying agent, reference may be made to surfactant polymers such as polyesters having a molecular weight of between 1000 and 3000 g/mol, products of condensation between a poly(isobutenyl)succinic acid or the anhydride thereof and a polyethylene glycol, block copolymers having a molecular weight of between 2500 and 3500 g/mol, for example those sold under the Hypermer® names, sorbitan extracts, for instance sorbitan monooleate, sorbitan isostearate or sorbitan sesquioleate, polyethoxylated sorbitan esters, or else diethoxylated oleocetyl alcohol or tetraethoxylated lauryl acrylate, condensation products of higher fatty alcohols with ethylene oxide, such as the reaction product of oleyl alcohol with 2 ethylene oxide ; condensation products of alkylphenols and ethylene oxide, such as the reaction product of nonyl phenol with 4 ethylene oxide. Products like Witcamide® 511, betaine products and ethoxylated amine are also good candidates as emulsifying agents.

In a preferred embodiment, the emulsifying agent is a sorbitan monoleate, polyethoxylated sorbitan esters or tall oil fatty acid diethanolamide.

The inverse emulsion of polymer A may contain at least two emulsifying agents, preferably at least three emulsifying agents, even more preferably at least four emulsifying agents. The inverse emulsion of polymer A advantageously comprises from 0.8 to 6% by weight, preferably from 0.8 to 3 wt% of at least one emulsifying agent.

The inverse emulsion of polymer A advantageously comprises from 1 to 12% by weight, preferably from 2 to 8 wt% of at least one inverting agent.

The inverse emulsion of polymer A may comprise from 1 to 17% by weight of salts.

Salts present in the inverse emulsion may be for example sodium salts, lithium salts, potassium salts, magnesium salts, aluminum salts, ammonium salts, phosphate salts, sulfate salts, chloride salts, fluoride salts, citrate salts, acetate salts, tartrate salts, hydrogen phosphate salts, water soluble inorganic salts, other inorganic salts and mixtures thereof. These salts include sodium chloride, sodium sulfate, sodium bromide, calcium chloride, ammonium sulfate, ammonium chloride, lithium chloride, lithium bromide, potassium chloride, potassium bromide, magnesium sulfate, aluminum sulfate, ammonium hydrogen phosphate, sodium hydrogen phosphate, potassium hydrogen phosphate and mixtures thereof. Sodium chloride, calcium chloride, ammonium chloride, ammonium sulfate are preferred, and mixtures thereof are further preferred.

Solid particles of water-soluble polymer B

The water-soluble polymer B comprises at least one hydrophilic cationic monomer and at least one hydrophilic anionic monomer.

Advantageously, the hydrophilic cationic monomer or monomers that can be used in the invention are chosen from monomers derived from vinyl-type (advantageously acrylamide, acrylic, allylic or maleic), these monomers having a phosphonium or quaternary ammonium function. In particular and in a non-limiting manner, we can mention diallyldialkyl ammonium salts such as diallyl dimethyl ammonium chloride (DADMAC); salified or quaternized salts of dialkyl-aminoalkylacrylamides ; salified or quaternized salts of dialkyl-aminoalkylmethacrylamides, such as methacrylamido-propyl trimethyl ammonium chloride (MAPTAC), acrylamido-propyl trimethyl ammonium chloride (APTAC) salified or quaternized salts of dialkyl aminoalkyl acrylate such as salified or quaternized dimethylaminoethyl acrylate, salified or quaternized salts of dialkyl aminoalkyl methacrylate such as salified or quaternized dimethylaminoethyl methacrylate and mixtures thereof. Advantageously, the alkyl groups are $C_1$-$C_3$. Preferably, the hydrophilic cationic monomer is quaternized. Preferably, the hydrophilic cationic monomer is salified or quaternized dimethylaminoethyl acrylate, preferably quaternized.

The skilled person in the art knows how to prepare the quaternized monomers, for example by means of quaternizing agent of the R-X type, R being an alkyl group and X being a halogen or a sulfate. The quaternizing agent may be selected from dialkyl sulfates comprising from 1 to 6 carbon atoms or alkyl halides comprising from 1 to 6 carbon atoms. Preferably, the quaternizing agent is selected from methyl chloride, benzyl chloride, dimethyl sulfate or diethyl sulfate. In addition, the present invention also covers DADMAC, APTAC and MAPTAC monomers in which the counterion is a sulfate, fluoride, bromide or iodide instead of chloride.

By "quaternizing agent" we mean a molecule that can alkylate a tertiary amine.

The water-soluble polymer B may contain different hydrophilic cationic monomer types, for example DMAEA and DMAEMA, but contains preferably one hydrophilic cationic monomer type.

Advantageously, the hydrophilic anionic monomer(s) are chosen from monomers having vinyl functions (preferably acrylic, maleic, fumaric, malonic, itaconic, or allylic), and contain a carboxylate, phosphonate, phosphate, sulfate, sulfonate, or other anionically charged group. Examples of suitable monomers include acrylic acid; methacrylic acid; dimethylacrylic acid; itaconic acid; crotonic acid; maleic acid; fumaric acid; acrylamido undecanoic acid; 3-acrylamido 3-methylbutanoic acid; maleic anhydride; strong acid type monomers having for example a sulfonic acid or phosphonic acid function such as vinylsulfonic acid, vinylphosphonic acid, allylsulfonic acid, methallylsulfonic acid, 2-methylidenepropane-1, 3-disulfonic acid, 2-sulfoethylmethacrylate, sulfopropylmethacrylate, sulfopropylacrylate, allylphosphonic acid, styrene sulfonic acid, 2-acrylamido-2-methylpropane sulfonic acid (ATBS), 2-acrylamido-2-methylpropane disulfonic acid; water-soluble salts of these monomers such as their alkali metal, alkaline earth metal, or ammonium salts; and mixtures thereof. They also include hemi esters of maleic acid or itaconic acid, and salts thereof. Preferably, the hydrophilic anionic monomer(s) are selected from the group consisting of acrylic acid, methacrylic acid, 2-acrylamido-2-methylpropane sulfonic acid, their salts and mixtures thereof.

In a particular mode, the hydrophilic anionic monomer(s) may be salified. Alternatively, it may be a mixture of an acid form and a salified form, for example a mixture of acrylic acid and acrylate.

By salified, it is meant that at least one acidic function of the water-soluble anionic monomer is replaced with a salt that neutralizes the negative charge of the acidic function. In other words, the non-neutralized (non-salified) form corresponds to the acidic form of the monomer, e.g. R-C(=O)-OH in the case of the carboxylic acid function, whereas the neutralized form of the monomer corresponds to the $R-C(=O)-O^- M^+$ form, where $M^+$ is a counterion (e.g. a metal salt or ammonium) of positive charge. The neutralization of the acid functions of the polymer can be partial or total.

The salified form advantageously corresponds to salts of alkali metals (Li, Na, K...), alkaline earth metals (Ca, Mg...) or ammonium (e.g. the ammonium ion or a tertiary ammonium). Preferred salts are sodium salts.

The salification can be done before, during or after the polymerization.

The water-soluble polymer B may also contain monomers such as hydrophilic non-ionic monomer(s) and/or hydrophilic zwitterionic monomer(s) and/or hydrophobic monomer(s) or hydrophobic macromonomer(s).

Advantageously, the hydrophilic non-ionic monomer(s) are selected, in particular, from the group comprising water-soluble vinyl monomers, such as acrylamide, methacrylamide, N-alkylacrylamides, N-alkylmethacrylamides, N,N-dialkyl acrylamides (e.g. N,N-dimethylacrylamide or N,N-diethylacrylamide), N,N-dialkylmethacrylamides, alkoxylated esters of acrylic acid alkoxylated esters of methacrylic acid, N-vinylpyrrolidone, N-methylolacrylamide, N-vinylformamide (NVF), N-vinylacetamide, N-vinylimidazole, N-vinylsuccinimide, acryloylmorpholine (ACMO), acryloylchloride glycidyl methacrylate, glyceryl methacrylate, diacetone acrylamide, hydroxyalkyl (meth)acrylate, aminoalkyl (meth)acrylate, thioalkyl (meth)acrylate, hydroxyalkylacrylates, hydroxyalkyl methacrylates, and mixtures thereof. Among these non-ionic monomers, the alkyl groups are advantageously $C_1$-$C_5$, more advantageously $C_1$-$C_3$. They are preferably linear alkyls. Preferably, the hydrophilic non-ionic monomer(s) are selected from the group consisting of acrylamide, methacrylamide, N-vinylpyrrolidone and N-vinylformamide, most preferably it is acrylamide.

Advantageously, the hydrophilic zwitterionic monomer(s) that can be used in the invention is a derivative of a vinyl (particularly an acrylamide, acrylic, allylic or maleic ), this monomer having an amine or quaternary ammonium function and a carboxylic acid (or carboxylate), sulphonic acid (or sulphonate) or phosphoric acid (or phosphate or phosphonate). The dimethylaminoethyl acrylate derivatives, such as 2 - ((2- (acryloyloxy) ethyl) dimethylammonio) ethane-1-sulfonate, may be mentioned in particular and in a non-limiting manner, the 3 - ((2- (acryloyloxy) ethyl) dimethylammonio) propane-1-sulfonate, 4 - ((2-(acryloyloxy) ethyl) dimethylammonio) butane-1-sulfonate, [2- (acryloyloxy) ethyl] (dimethylammonio) acetate, methacrylate derivatives of dimethylaminoethyl such as 2 - ((2-(methacryloyloxy) ethyl) dimethylammonio) ethane-1-sulfonate, 3 - ((2- (methacryloyloxy) ethyl) dimethylammonio) propane-1-sulfonate, 4 - ((2 - (methacryloyloxy) ethyl) dimethylammonio) butane-1-sulfonate, [2- (methacryloyloxy) ethyl] (dimethylammonio) acetate, dimethylamino propylacrylamide derivatives such as 2 - ((3-acrylamidopropyl) dimethylammonio) ethane-1-sulfonate, 3 - ((3-acrylamidopropyl) dimethylammonio) propane-1-sulfonate, 4 - ((3-acrylamidopropyl) dimethylammonio) butane-1-sulfonate, [3-(acryloyl) oxy) propyl] (dimethylammonio) acetate, dimethylamino propyl methylacrylamide derivatives such as 2 - ((3-methacrylamidopropyl) dimethylammonio) ethane-1-sulfonate, 3 - ((3-methacrylamidopropyl) dimethylammonio) propane-1-sulfonate 4 - ((3-methacrylamidopropyl) dimethylammonio) butane-1-sulfonate and [3-(methacryloyloxy) propyl] (dimethylammonio) acetate.

The water-soluble polymer B may also contain at least one hydrophobic monomer or at least one hydrophobic macromonomer. The concentration of hydrophobic monomers and hydrophobic macromonomers in mol% based on the total monomer and macromonomer content is advantageously comprised between 0.0001% and 10%, preferably between 0.001% and 5%, more preferably between 0.01% and 3%, even more preferably between 0.1 and 2%, even more preferably between 0.2 and 1.5%, even more preferably 0.3 and 1.3%.

When the water-soluble polymer B comprises hydrophobic monomer(s) or hydrophobic macromonomer(s) their quantity is adjusted so that the polymer remains soluble in water.

The water-soluble polymer B preferably comprises acrylamide. The concentration of acrylamide based on the total monomer and macromonomer content is advantageously comprised between 0 and 94 mol%, preferably between 30 and 90 mol%, more preferably between 45 and 70 mol%.

In a preferred embodiment, the water-soluble polymer B is a polymer constituted of dimethylaminoethyl acrylate salified and/or quaternized, and at least one of the two anionic monomers 2-acrylamido-2-methylpropane sulfonic acid (ATBS) and/or its salts, or acrylic acid and/or its salts. In this case the amount of dimethylaminoethyl acrylate salified and/or quaternized is advantageously comprised between 2 and 30 mol%, preferably between 5 and 25 mol%, more preferably between 5 and 20 mol%, and the amount of 2-acrylamido-2-methylpropane sulfonic acid (ATBS) and/or its salts, or acrylic acid and/or its salts is advantageously comprised between 1 and 40 mol%, preferably between 2 and 35 mol%, more preferably between 7 and 30 mol%, and the amount of acrylamide is the complement to reach a total amount of 100%.

In another preferred embodiment, the water-soluble polymer B is a polymer constituted of dimethylaminoethyl acrylate salified and/or quaternized, acrylamide, and of the following monomers acrylic acid and/or its salts, and 2-acrylamido-2-methylpropane sulfonic acid (ATBS) and/or its salts. In this case the amount of dimethylaminoethyl acrylate salified and/or quaternized is advantageously comprised between 2 and 30 mol%, preferably between 5 and 25 mol%, more preferably between 5 and 20 mol%, the amount of acrylic acid and/or its salts, or 2-acrylamido-2-methylpropane sulfonic acid (ATBS) and/or its salts is comprised between 1 and 40 mol%, preferably between 2 and 35 mol%, more preferably between 7 and 30 mol%, and the amount of acrylamide is the complement to reach a total amount of 100%.

The person skilled in the art will be able to adjust the respective amounts of monomers and macromonomers of polymers B to reach 100 mol%.

The polymerization of polymer B is generally a radical polymerization. By radical polymerization, we include radical polymerization by means of UV, azo, redox or thermal initiators as well as controlled radical polymerization (CRP) techniques or Reversible Chain Transfer by addition-Fragmentation (RAFT) polymerization techniques or MADIX. According to a very preferred embodiment, polymer B is obtained by RAFT polymerization or CRP or MADIX polymerization techniques.

In another preferred embodiment, when polymer B comprises hydrolysable monomer, a post-treatment step is applied on polymer B to form anionic monomers and eventually make polymer B amphoteric, for example between 0.5 and 20 mol% of anionic monomer.

The post-treatment step consists in reacting hydrolysable function such as amide with a hydrolysis agent. This hydrolysis agent may be an enzyme, an ion exchange resin, or an alkali metal, preferably, it is a Brønsted base.

After the post-treatment step, carboxylate group or carboxylic acid moieties are created. Indeed, the reaction between hydrolysis agent and the hydrolysable function such as amide results in the formation of a carboxylate or carboxylic acid moieties.

Carboxylate bearing polyacrylamides may be obtained according to different processes. Among them, one process is to polymerize acrylamide which has been partially or totally pre-hydrolyzed before the polymerization with caustic soda or an enzyme such as an amidase. Another process is to copolymerize acrylamide and acrylic acid and/or salt thereof. Another process is to add a hydrolyzing agent before, at the start and/or during the polymerization, wherein said addition is either made on the concentrated or diluted solution, on the emulsion, dewatered emulsion, or on the gelatinous substance. Another process is to add a hydrolyzing agent after the polymerization, wherein said addition is either made in concentrated or diluted media. The polymerization can be solution polymerization, emulsion polymerization, dispersion polymerization, or gel polymerization. The post-treatment step can be made on the finished polymer or the polymer can be dissolved at a pumpable concentration in a solvent at typically at 1 to 6% of polymer concentration.

All the above techniques have advantages and drawbacks related to waste gas production, molecular weight, heat release, process of production.

In a very preferred embodiment, polymer B is obtained according to a process that comprises successively:

- Providing an aqueous solution of monomers comprising at least one hydrophobic cationic monomer (and/or macromonomer) and at least one hydrophobic anionic monomer (and/or macromonomer), and preferably acrylamide;
- Polymerizing said aqueous solution of monomers to obtain a gel of polymer;
- Cutting said gel in pieces, advantageously of less than 10 cm$^3$, preferably less than 5 cm$^3$, more preferably less than 1 cm$^3$; and preferably not less than 1 mm$^3$,
- Carrying out a post-treatment step by mixing a hydrolyzing agent on said pieces of gel;
- Obtaining treated pieces of gel of polymer B at the end of the post-treatment step;
- Drying said treated pieces of gel;
- Obtaining a powder of polymer B;
- Optionally grinding said powder;
- Optionally sieving said powder.

The rate of conversion is the number of hydrolysable functions, such as an amide, in mol% which are converted in carboxylate or carboxylic acid moieties, as compared to the total amount of mole of monomeric and macromonomeric in the polymer before the post-treatment (including hydrolysable and non-hydrolysable monomeric).

In a preferred embodiment, the rate of conversion is at least 1 mol %, preferably at least 5 mol%. The maximum rate of conversion depends on parameters such as the content of monomers having a hydrolysable function, the number of hydrolysable functions on each monomer, and the total carboxylate functions content in the polymer. Generally, the maximum rate of conversion is 40 mol%, preferably 35 mol%. The preferred rate of conversion is comprised between 5 and 25 mol%.

According to a preferred embodiment, the hydrolysable function in the polymer B before the post-treatment step is an amide from acrylamide monomer or an ester from the cationic monomer, and the post-treatment step converts the amide into carboxylate or carboxylic acid group. More preferably, the amide function of the acrylamide monomer or an ester from the cationic monomer is converted into carboxylate salt and/or carboxylic acid moieties.

For example, if the polymer before the post-treatment is obtained by polymerization of 80 mol% of acrylamide, 20 mol% of dimethylaminoethyl acrylate quaternized, that the post treatment step is made with caustic soda, and that the rate of conversion is 5 mol%, the obtained polymer B composition is 78 mol% of acrylamide, 5 mol% of sodium carboxylate moieties, 17 mol% of dimethylaminoethyl acrylate.

The rate of conversion relates to functions converted to carboxylate or carboxylic acid moieties during the post-treatment step. It does not include carboxylate and carboxylic acid moieties that do not result from the post-treatment step. For instance, when a polymer is prepared by polymerization of acrylamide, a cationic monomer, ATBS and acrylic acid, the rate of conversion does not include the carboxylic acid group of acrylic acid.

It is also possible to use a branching agent. Such an agent is, for example, chosen from methylenebisacrylamide (MBA), ethylene glycol diacrylate, tetraallyl ammonium chloride polyethylene glycol dimethacrylate, diacrylamide, cyanomethyl acrylate, vinyloxyethyl acrylate, vinyloxy methacrylate, triallylamine, formaldehyde, glyoxal, glycidyl ethers such as ethylene glycol diglycidyl ether, and epoxies, and mixtures thereof. When using such branching agent, the quantity used is such that polymer B remains a water-soluble polymer.

Those skilled in the art will adjust, in a known manner, the amounts of branching agent.

It is also possible to use a free radical chain transfer agent, otherwise known as a chain limiter. The use of a transfer chain agent is particularly advantageous for controlling the molecular weight of the polymer obtained. By way of example of a transfer agent, reference may be made to methanol, isopropanol, sodium hypophosphite, 2-mercaptoethanol and sodium methallyl sulfonate, and mixtures thereof. Those skilled in the art will adjust, in a known manner, the amounts of the transfer agent.

According to the invention, the water-soluble polymer B may have a structure which is a linear, branched, star, comb, block, or microblock structure or a controlled polydispersity in terms of molecular weight. These properties can be obtained by selecting the initiator, the transfer agent, the polymerization technique such as the template polymerization, controlled radical polymerizations known as RAFT (reversible chain transfer by addition-fragmentation), NMP (Nitroxide Mediated Polymerization) or ATRP (Atom Transfer Radical Polymerization) or MADIX type polymerization, the incorporation of structural monomers, and/or the concentration. The general knowledge of the skilled person allows him or her to prepare a water-soluble polymer having one of these types of structure. Polymer B according to the invention, whatever its morphology, remains water soluble.

According to the invention, the solid particles of the water-soluble polymer B may be in the form of powder, fines, granules or beads. They may be spherical or not.

In a preferred embodiment, the particles of polymer B are of fine particle size and are called fines. Fines are preferably obtained by sieving and/or grinding the powder obtained by gel polymerization process above described after drying. Before mixing them with the inverse emulsion of polymer A, the fines of polymer B have advantageously a particle size distribution, represented by the D50 value, comprised between $5\mu m$ and $750\mu m$, preferably between $50\mu m$ and $400\mu m$, more preferably between $100\mu m$ and $350\mu m$. The selection of fines is particularly useful to reach optimal performances in terms of viscosifying effect and suspensive effect in the injection fluid.

There are several methods used to monitor particle size distribution. The most popular methods include sieve analysis, direct imaging and laser diffraction. Historically, particle size distributions were calculated based on results from sieve analysis. Sieve analysis presents particle size information in the form of an S - curve of cumulative mass retained on each sieve versus the sieve mesh size. The most commonly used metrics when describing particle size distributions are D-Values (D10, D50 & D90) which are the intercepts for 10%, 50% and 90% of the cumulative mass.

D-values can be thought of as the diameter of the sphere which divides the sample's mass into a specified percentage when the particles are arranged on an ascending mass basis. For example, the D10 is the diameter at which 10% of the sample's mass is comprised of particles with a diameter less than this value. The D50 is the diameter of the particle that 50% of a sample's mass is smaller than and 50% of a sample's mass is larger than.

The particles of polymer B may absorb part or all of the free water of the inverse emulsion and be pre-swollen but remaining solid. The size of the particles in the composition tends to grow due to the water absorption. The size of particles of polymer B in the composition is advantageously comprised between $10\mu m$ and $1500\mu m$, preferably between

80$\mu$m and 1000$\mu$m, more preferably between 150$\mu$m and 800$\mu$m.

Injection fluid and method of treating a portion of subterranean formation

The composition of the invention offers an improved suspensive effect, which is less sensible to shear conditions. The composition of the invention also improves the efficiency at same dosage or keep the same efficiency at lower dosage. This is particularly interesting in fracturing operation, especially when High Viscosity Friction Reducers (HVFR) are used because the dosage of HVFR is generally important.

The composition has also the advantage of being in liquid form and thus easily transportable, dispersible, pumpable, storable, which facilitates its use in oil and gas recovery conditions.

In a second aspect, the invention provides an injection fluid for oil and gas recovery process, said fluid being prepared with the composition of the invention. The injection fluid may be a polymer flooding injection fluid or a fracturing fluid.

In the method of the invention, the injection fluid is generally made by mixing the composition of the invention with an aqueous medium such as water, sea water or brine. When the composition is mixed with a sufficient amount of aqueous medium, the inverse emulsion is inverted, and the polymer A is rapidly released, whereas the polymer B starts to dissolve slower in the aqueous medium, even if pre-swollen.

The injection fluid comprises the water-soluble polymers A and B in a total amount of advantageously from 0.0005% by weight to 3% by weight, preferably from 0.02 wt% to 2 wt%, more preferably from 0.05 wt% to 1 wt%, even more preferably from 0.1 wt% to 1 wt%. The amount of water-soluble polymers A and B varies depending on the oil and gas recovery process, the conditions in the subterranean formation (for example salinity and/or temperature), and the desired results.

The injection fluid may also comprise other components such as proppants (such as sand, coated sand, ceramic beads), alkaline agents, surfactants, complex nanofluid, microemulsions biocides, corrosion inhibitors, acids, scale inhibitors, clay swelling inhibitors, guar, guar derivatives, carboxy methyl cellulose derivatives, crosslinkers such as zirconium, titanate or borate compounds, delayed crosslinker, breakers, encapsulated breakers, preformed particle gels, nanogels, colloidal dispersion gels, clays, bentonites depending of the nature of the recovery process of oil and gas.

Surfactants are particularly useful in the injection fluid according to the invention because they may improve the efficiency of said fluid, especially in oil and gas recovery process. They are preferably chosen among anionic or cationic surfactants and betaines.

Thanks to the improved suspensive effect given by the composition of the invention to the injection fluid that contains particles such as proppants, encapsulated breakers, preformed particle gels, nanogels or microgels, said particles tends to be more stable in the injection fluid, and the sedimentation is greatly decreased.

In a third aspect, the present invention provides a method of treating a portion of subterranean formation comprising the steps of providing the composition of the invention, preparing an injection fluid with at least said composition, introducing the injection fluid into portion of the subterranean formation.

Treating a portion of a subterranean formation includes treating part of the subterranean formation or treating the entire subterranean formation.

In a fourth aspect, the invention provides a fracturing method comprising the steps of providing the composition of the invention, preparing a fracturing fluid with at least said composition and with at least a proppant, introducing the fracturing fluid into portion of the subterranean formation.

In a fifth aspect, the invention provides a polymer flooding method comprising the steps of providing composition of the invention, preparing a polymer flooding injection fluid with at least said composition, introducing the polymer flooding injection fluid into portion or the entire subterranean formation.

In a sixth aspect, the invention provides a method of improving the suspensive effect in an injection fluid comprising the steps of providing the composition of the invention, preparing the injection fluid by mixing said composition in water, sea water or brine, introducing the injection fluid into portion or the entire subterranean formation. The aqueous treatment fluid may be a fracturing fluid or a polymer flooding injection fluid.

More precisely, the invention provides a method of improving the suspensive effect in an injection fluid comprising the steps of providing the composition of the invention, preparing the injection fluid by mixing said composition in water, sea water or brine, wherein the resultant injection fluid has an improvement in suspensive effect, when compared to the same injection fluid in which the composition of the invention is replaced by a composition which is identical except that the polymers do not comprise cationic monomer according to the invention.

The composition of the invention may also be used in any subterranean treatment such as drilling operations, stimulation treatments, completion operations and enhanced oil recovery process.

In a preferred embodiment, the present invention provides a fracturing method comprising the steps of:

a) Providing the composition of the invention;

b) Adding said composition into an aqueous fluid to form an injection fluid;

c) Adding at least a proppant into the injection fluid either before or after step b;

d) Introducing the injection fluid into portion of the subterranean formation;

e) Fracturing portion of the subterranean formation with the injection fluid;

f) Recovering a mixture of gas, oil and aqueous fluid.

The composition of the invention may also be used advantageously in the paper making industry, in the water or sludge treatment industry, in the construction industry, in the mining industry, in the cosmetics, textile or detergency industry, in the agriculture, in civil engineering.

The present invention will further be described by reference to the following examples. The following examples are merely illustrative of the invention and are not intended to be limiting. Unless otherwise indicated, all percentages are by weight (wt%).

EXAMPLES

Abbreviation list:

DMAEA.MeCl: Dimethylaminoethyl acrylate, methyl chloride

AM: Acrylamide

AA: Acrylic acid

ATBS: 2-acrylamido-2-methlyporpane sulfonic acid

DADMAC: Diallyl dimethyl ammonium chloride

APTAC.MeCl: Acrylamido-propyl trimethyl ammonium chloride

**Inverse emulsion polymer A**

In a 1000 mL beaker are added 615 g of a 50wt% acrylamide solution in water and 262 g of a 80wt% solution of DMAEA MeCl in water. The pH is maintained at a value of 4,5. 0,4 g of Versenex 80 and 1,98 g of a solution of sodium bromate are added to the aqueous phase. The organic phase is prepared in a reactor by adding 175,1 grams of Exxsol D100S and 25 grams of sorbitan mono-oleate. The aqueous phase is added to the reactor at 500 rpm using a half-moon impeller. The emulsion is formed by using a high shear mixer.

The oxygen present in the emulsion is removed by purging with nitrogen for 30 min. The temperature of the emulsion is heated and fixed at 22°C before starting the polymerization. To initiate the polymerization, the mixture is stirred at 400 rpm and droplets of MBS (sodium metabisulfite) are added at a rate of 0,5 mL per minute. The temperature raises and is maintained at 50°C until a decrease of the temperature is noticed. 30 g of nonyl phenol 9-ethoxylate is added under stirring at 30°C to the emulsion. EM1 to EMI 11 are prepared according to the same synthesis protocol by adjusting the monomer compositions as presented in Table 1.

EMI 12 and EMI 13 are prepared according to the same synthesis protocol by adjusting the monomer compositions, and the quantity of initiator to achieve the molecular weight as presented in Table1.

EMI 14 is prepared using O-ethyl-S-(1-methoxycarbonyl)ethyl dithiocarbonate as RAFT agent.

EMI 15 is prepared according to the synthesis protocol of EMI 1 -EMI 11 and then diluted with a NaCl brine at a rate of 15 wt%.

EMI 16 is polymerized such as all the polymerization steps are conducted at a pressure of 80 mbar.

Table 1. Chemical composition of the emulsions (mol%)

| Polymer A | Ex or CEx | DMAEA. MeCl | APTAC.MeCl | DADMAC | AA | ATBS | AM | Process | Mw |
|-----------|-----------|-------------|------------|--------|-----|------|-----|---------|-------|
| EMI 1 | CEx | 20 | - | - | - | - | 80 | | 10.1M |
| EMI 2 | CEx | - | - | - | 5 | 5 | 90 | | 10.2M |
| EMI 3 | CEx | 50 | - | - | 50 | - | - | | 10.1M |
| EMI 4 | CEx | 50 | - | - | | 50 | - | | 10M |
| EMI 5 | Ex | - | 50 | - | 50 | - | - | | 9.8M |
| EMI 6 | Ex | - | - | 50 | - | 50 | - | | 9,9M |

(continued)

| Polymer A | Ex or CEx | DMAEA. MeCl | APTAC.MeCl | DADMAC | AA | ATBS | AM | Process | Mw |
|---|---|---|---|---|---|---|---|---|---|
| EMI 7 | Ex | 20 | - | - | 5 | 5 | 70 | | 10.1M |
| EMI 8 | Ex | - | 20 | - | - | 10 | 70 | | 10.2M |
| EMI 9 | Ex | - | - | 20 | 10 | - | 70 | | 10.3 |
| EMI 10 | Ex | - | 10 | - | - | 20 | 70 | | 9.9 |
| EMI 11 | Ex | - | - | 10 | 20 | - | 70 | | 9.7 |
| EMI 12 | Ex | 20 | - | - | 5 | 5 | 70 | | 8.1 |
| EMI 13 | Ex | 10 | - | - | 20 | - | 70 | | 14.9 |
| EMI 14 | Ex | 20 | - | - | 5 | 5 | 70 | RAFT | 10.1 |
| EMI 15 | Ex | 20 | - | - | - | 10 | 70 | Diluted | 10.1 |
| EMI 16 | Ex | 20 | - | - | 10 | - | 70 | Vacuum | 10.3 |

**Solid Particles**

a) Polymerization step

In a 2000 mL beaker are added 944 g of deionised water, 1080 g of a 50wt% acrylamide solution in water and 402 g of a 80wt% solution of DMAEA MeCl in water. The pH is between 3,8 and 3,2.

The resulting solution is cooled down to between 0 and 5°C and transferred to an adiabatic polymerization reactor. To eliminate any trace of oxygen, a bubbling of nitrogen is carried out for 30 min.

The compounds below are added to the reactor:

- 2 g of 2,2'-azobis(2-methylpropionitrile) AZDN
- 7 mL of ammonium persulfate at 2 g/L in water
- 5 mL of a solution of ammonium sulfate iron (II) hexahydrate (Mohr's salt) at 2 g/L in water
- 8 mL of a solution of sodium hypophosphite at 2g/L in water

After few minutes, the reactor is closed. The reaction time is between 2 to 5 hours until the maximum temperature is reached. After aging overnight, a gel of polymer is removed from the reactor and then cut into small pieces of gel having a particle size comprised between 1 to 6 mm.

b) Post Treatment Step

500g of pieces of gel obtained in step a) are mixed with 25.3g of a 50wt% solution of NaOH in water. The preparation is maintained at 90°C for 90 min in an oven with forced air ventilation. The final product is then cut and dried to obtain a powder with sodium carboxylate moieties (SCM).

P1 to P11 are prepared according to the polymerization process a), and the resulting pieces of gel are cut and dried to afford a powder, wherein the monomer composition is adjusted as presented in Table 2.

P12 and P13 are prepared as P1-P11 but the amount of sodium hypophosphite is adjusted to achieve the molecular weight as presented in Table 2.

P14 is prepared using O-ethyl-S-(1-methoxycarbonyl)ethyl dithiocarbonate as RAFT agent.

P15 is prepared according to the polymerization process a), and post treatment b) to afford a powder, wherein the monomer composition is adjusted as presented in Table 2. The resulting post-hydrolyzed polymer corresponds to P15'.

Table 2. Chemical composition of the granulated polymer

| Polymer B | Ex or CEx | DMAEA.MeCl | APTAC.MeCl | DADMAC | AA | ATBS | AM | Process | Mw |
|---|---|---|---|---|---|---|---|---|---|
| P1 | CEx | 20 | - | - | - | - | 80 | | 12.2M |
| P2 | CEx | - | - | - | 5 | 5 | 90 | | 12.4M |
| P3 | Ex | 50 | - | - | 50 | - | - | | 12.3M |

(continued)

| Polymer B | Ex or CEx | DMAEA.MeCl | APTAC.MeCl | DADMAC | AA | ATBS | AM | Process | Mw |
|---|---|---|---|---|---|---|---|---|---|
| P4 | Ex | 50 | - | - | | 50 | - | | 11.8M |
| P5 | Ex | - | 50 | - | 50 | - | - | | 12.3M |
| P6 | Ex | - | - | 50 | - | 50 | - | | 12.1M |
| P7 | Ex | 20 | - | - | 10 | - | 70 | | 12.8M |
| P8 | Ex | - | 20 | - | - | 10 | 70 | | 12.5M |
| P9 | Ex | 10 | - | - | 20 | - | 70 | | 12.1M |
| P10 | Ex | - | 10 | | - | 20- | 70 | | 11.9M |
| P11 | Ex | - | - | 10 | 10 | 10 | 70 | | 11.8M |
| P12 | Ex | 20 | - | - | 10 | - | 70 | | 8.2M |
| P13 | Ex | 10 | - | - | 20 | - | 70 | | 15.1M |
| P14 | Ex | 10 | - | - | 10 | 10 | 70 | Raft | 12M |
| P15 | Ex | 15 | - | - | - | 10 | 75 | Post treatment | 12.1M |
| P15' | Ex | 12 | - | - | 13 | 10 | 65 | Post hydrolysed | 12.4M |

Preparation of polymer fines

A grinder is used to decrease the particle sizes, then a sieve is used to afford particles below 350 $\mu$m, and the typical particle size distribution is D (10) 73,8 $\mu$m, D (50) 129 $\mu$m, D(90) 223 $\mu$m. Fines F1 to F15 are obtained according to said process with respective powder P1 to P15'.

Preparation of composition (solid particles + inverse emulsion)

The compositions are prepared by incorporation of the fines to the emulsion under magnetic stirring at 500 rpm for 10 minutes. Table 3 describes the 23 composition contents. These compositions contain 90%w of inverse emulsion and 10%w of solid particles.

Table 3. Composition Contents

| | Ex or CEx | EM | F |
|---|---|---|---|
| Composition 1 | CEx | EMI 1 | F1 |
| Composition 2 | CEx | EMI 1 | F2 |
| Composition 3 | CEx | EMI 2 | F1 |
| Composition 4 | CEx | EMI 2 | F2 |
| Composition 5 | CEx | EMI 1 | F3 |
| Composition 6 | CEx | EMI 2 | F4 |
| Composition 7 | CEx | EMI 3 | F1 |
| Composition 8 | CEx | EMI 4 | F2 |
| Composition 9 | Ex | EMI 3 | F4 |
| Composition 10 | Ex | EMI 4 | F3 |
| Composition 11 | Ex | EMI 5 | F6 |
| Composition 12 | Ex | EMI 6 | F5 |
| Composition 13 | Ex | EMI 7 | F8 |
| Composition 14 | Ex | EMI 8 | F7 |

(continued)

|  | Ex or CEx | EM | F |
|---|---|---|---|
| Composition 15 | Ex | EMI 8 | F10 |
| Composition 16 | Ex | EMI 10 | F8 |
| Composition 17 | Ex | EMI 12 | F13 |
| Composition 18 | Ex | EMI 13 | F12 |
| Composition 19 | Ex | EMI 14 | F11 |
| Composition 20 | Ex | EMI 9 | F14 |
| Composition 21 | Ex | EMI 14 | F9 |
| Composition 22 | Ex | EMI 15 | F10 |
| Composition 23 | Ex | EMI 8 | F15' |
| Composition 24 | Ex | EMI12 | F15' |

General Viscosity and suspensive effect evaluation procedures

Solutions of polymer, which correspond to fictive injection fluids, are prepared by adding under shear the required amount of compositions 1 to 8 to reach 5040 ppm of active polymer concentration into 400 mL of API brine. The API brine contains 85g/l NaCl and 33g/l $CaCl_2$, $2H_2O$ in deionized water. The solution is then mixed for 30 minutes at 500 rpm.

Rheological properties are evaluated at 25°C using an Anton Paar MCR302 rheometer equipped with a stainless-steel cone plate of 50mm and 2°. Both viscosity ($\eta$) and first normal stress difference (N1) are recorded by performing a flow curve in the 0.1-500 $s^{-1}$ shear rate range. The viscoelastic properties are evaluated on the same equipment by performing an oscillatory sweep measurement in the linear viscoelastic regime. Elastic modulus (G') and viscous modulus (G") are recorded in the 0.1-10 Hz frequency range at 10% of strain.

The rheological measurements are used to determine the following parameters:

The viscoelastic relaxation time of the fluid:

$$\tau_{osc.} = \frac{1}{2\pi.f_{G'=G''}}$$

The $\lambda_{e/v}$ value

$$\lambda_{e/v} = \frac{0.5.c.\tau_{osc.}N_1(\dot{\gamma})}{\eta(\dot{\gamma})}$$

The theoretical settling rate at rest of sand particles (d: 0.86mm, $\Delta\rho$: 1650 kg/m$^3$, g: 9.81m/s$^2$, K and n are the power-law viscosity coefficients between 100 and 400s$^{-1}$):

$$v_p = \left(\frac{2^n g\Delta\rho}{9K}\right)^{\frac{1}{n}}.d^{\frac{n+1}{n}}$$

Results

## Evaluation of compositions 1 to 18 in API brine

From the flow and oscillatory measurements, the $\lambda_{e/v}$ value can be calculated at a shear rate of 500 s$^{-1}$. When $\lambda_{e/v} > 1$ the system is elastically dominated showing good suspensive properties. On the contrary when $\lambda_{e/v} < 1$ the system is viscously dominated showing poor suspensive properties.

For compositions 1 to 18, measurements are gathered in table 4. Viscosity, settling rate, relaxation time and $\lambda_{e/v}$ show better suspensive properties for all examples (Ex) compared to the counter-examples (Cex).

Table 4. Rheological measurements in API brine

| Example | Ex or Cex | Viscosity (cp) | | N1 (Pa) | | Settling rate (mm/s) | rose. (s) | $\lambda_{e/v}$ (500 s$^{-1}$) |
|---|---|---|---|---|---|---|---|---|
| | | Visco 100s$^{-1}$ | Visco 500 s$^{-1}$ | N1 100s$^{-1}$ | N1 500s$^{-1}$ | | | |
| Composition 1 | Cex | 35 | 19 | 33 | 276 | 28 | 0,24 | 1,74 |
| Composition 2 | Cex | 28 | 16 | 28 | 161 | 35 | 0,18 | 0,91 |
| Composition 3 | Cex | 26 | 15 | 22 | 146 | 41 | 0,12 | 0,58 |
| Composition 4 | Cex | 24 | 13 | 20 | 139 | 44 | 0,1 | 0,53 |
| Composition 5 | Cex | 34 | 20 | 33 | 284 | 30 | 0,24 | 1,70 |
| Composition 6 | Cex | 29 | 18 | 29 | 156 | 34 | 0,17 | 0,74 |
| Composition 7 | Cex | 35 | 20 | 34 | 284 | 29 | 0,25 | 1,78 |
| Composition 8 | Cex | 30 | 18 | 30 | 170 | 29 | 0,27 | 1,28 |
| Composition 9 | Ex | 43 | 29 | 42 | 408 | 23 | 0,4 | 2,81 |
| Composition 10 | Ex | 44 | 30 | 44 | 420 | 22 | 0,41 | 2,87 |
| Composition 11 | Ex | 42 | 30 | 41 | 401 | 23 | 0,39 | 2,61 |
| Composition 12 | Ex | 43 | 31 | 44 | 414 | 22 | 0,41 | 2,74 |
| Composition 13 | Ex | 48 | 35 | 50 | 478 | 18 | 0,47 | 3,21 |
| Composition 14 | Ex | 47 | 38 | 49 | 474 | 19 | 0,46 | 2,87 |
| Composition 15 | Ex | 59 | 45 | 62 | 594 | 13 | 0,62 | 4,09 |
| Composition 16 | Ex | 56 | 43 | 61 | 578 | 14 | 0,6 | 4,03 |
| Composition 17 | Ex | 63 | 47 | 61 | 688 | 9 | 0,79 | 5,78 |

(continued)

| Example | Ex or Cex | Viscosity (cp) | | N1 (Pa) | | Settling rate (mm/s) | rose. (s) | $\Lambda$ e/v (500 s$^{-1}$) |
|---|---|---|---|---|---|---|---|---|
| | | Visco 100s$^{-1}$ | Visco 500 s$^{-1}$ | N1 100s$^{-1}$ | N1 500s$^{-1}$ | | | |
| Composition 18 | Ex | 62 | 45 | 59 | 654 | 11 | 0,74 | 5,38 |
| Composition 19 | Ex | 64 | 46 | 66 | 755 | 7 | 0,93 | 7,63 |
| Composition 20 | Ex | 63 | 47 | 66 | 732 | 8 | 0,91 | 7,09 |
| Composition 21 | Ex | 65 | 49 | 67 | 767 | 7 | 0,9 | 7,04 |
| Composition 22 | Ex | 65 | 49 | 69 | 788 | 7 | 0,95 | 7,64 |
| Composition 23 | Ex | 68 | 55 | 70 | 808 | 7 | 1,01 | 7,42 |
| Composition 24 | Ex | 70 | 57 | 63 | 911 | 6 | 1,09 | 8,71 |

**Claims**

1. A composition for preparing an injection fluid in oil and gas recovery comprising:

   - an inverse emulsion of a water-soluble polymer A, and
   - solid particles of a water-soluble polymer B,

   wherein each one of water-soluble polymer A and water-soluble polymer B comprise at least one hydrophilic cationic monomer and at least one hydrophilic anionic monomer.

2. Composition according to claim 1, wherein polymer A comprises between 5 and 50 mol% of hydrophilic cationic monomer and between 1 and 50 mol% of hydrophilic anionic monomer, the remaining monomer composing the water-soluble polymer A being chosen from non-ionic(s) monomer(s) and/or zwitterionic(s) monomer(s) and/or hydrophobic(s) monomer(s).

3. Composition according to claim 1 or 2, wherein polymer A comprises a molar ratio between the hydrophilic cationic monomer and the hydrophilic anionic monomer from 3 to 1.

4. Composition according to any one of claims 1 to 3, wherein polymer B comprises between 5 and 50 mol% of hydrophilic cationic monomer and between 1 and 50 mol% of hydrophilic anionic monomer, the remaining monomer composing the water-soluble polymer B being chosen from non-ionic(s) monomer(s) and/or zwitterionic(s) monomer(s), and/or hydrophobic(s) monomer(s).

5. Composition according to any one of claims 1 to 4, wherein polymer B comprises a molar ratio between the hydrophilic cationic monomer and the hydrophilic anionic monomer from 1 to 3.

6. Composition according to any one of claims 1 to 5, wherein

   - the molar ratio between the hydrophilic(s) cationic(s) monomer(s) and the hydrophilic(s) anionic(s) monomer(s) of polymer A is more than 1, and
   - the molar ratio between the hydrophilic(s) cationic(s) monomer(s) and the hydrophilic(s) anionic(s) monomer(s) of polymer B is less than 1.

7. Composition according to any one of claims 1 to 6, wherein the average molecular weight by weight of polymer A and polymer B is between 2 million g/mol and 30 million g/mol,
and wherein the average molecular weight by weight of the polymer A is lower than the average molecular weight by weight of polymer B.

8. Composition according to any one of claims 1 to 7, wherein the composition has a weight ratio between the inverse emulsion of polymer A and the solid particles of polymer B of between 1:1 and 10:1,
and wherein the total concentration of polymer A and polymer B in the composition is comprised between 30 wt% and 80 wt%.

9. Composition according to any one of claims 1 to 8, wherein hydrophilic cationic monomer is selected from the group consisting of salified or quaternized dimethylaminoethyl acrylate, salified or quaternized dimethylaminoethyl methacrylate, diallyldimethyl ammonium chloride, acrylamidopropyltrimethylammonium chloride, and methacrylamidopropyltrimethylammonium chloride,
and wherein the hydrophilic anionic monomer is selected from the group consisting of acrylic acid; methacrylic acid; dimethylacrylic acid; itaconic acid; crotonic acid; maleic acid; fumaric acid; acrylamido undecanoic acid; 3-acrylamido 3-methylbutanoic acid; maleic anhydride; strong acid type monomers having for example a sulfonic acid or phosphonic acid function such as vinylsulfonic acid, vinylphosphonic acid, allylsulfonic acid, methallylsulfonic acid, 2-methylidenepropane-1, 3-disulfonic acid, 2-sulfoethylmethacrylate, sulfopropylmethacrylate, sulfopropylacrylate, allylphosphonic acid, styrene sulfonic acid, 2-acrylamido-2-methylpropane sulfonic acid, 2-acrylamido-2-methylpropane disulfonic acid, hemi esters of maleic acid or itaconic acid, and water-soluble salts of these monomers.

10. Composition according to any one of claims 1 to 9, wherein the inverse emulsion is obtained by polymerization carried out partially or totally at a pressure of between 0.1 and 200 mbar,
and wherein the solid particles of polymer B are in the form of powder, fines, granules or beads.

11. An injection fluid made by mixing water or brine with the composition of any of claims 1 to 10, wherein, in said injection fluid, the total amount of polymer A and polymer B is comprised between 0.0005 wt% to 1 wt%.

12. A method of treating a portion of subterranean formation comprising the steps of providing the composition of any of claims 1 to 10, preparing an injection fluid with at least said composition and water or brine, and introducing the injection fluid into a portion of the subterranean formation.

13. A fracturing method comprising the steps of providing the composition of any of claims 1 to 10, preparing a fracturing fluid with at least said composition, at least a proppant and water or brine, and introducing the fracturing fluid into a portion of the subterranean formation.

14. A polymer flooding method comprising the steps of providing the composition of any of claims 1 to 10, preparing a polymer flooding injection fluid with at least said composition and water or brine, and introducing the polymer flooding injection fluid into a portion or the entire subterranean formation.

15. A method of improving the suspensive effect in an injection fluid, comprising the steps of providing the composition of any of claims 1 to 10, preparing the injection fluid by mixing said composition in water or brine, and introducing the injection fluid into a portion or the entire subterranean formation.

Europäisches
Patentamt

European
Patent Office

Office européen
des brevets

## EUROPEAN SEARCH REPORT

Application Number

EP 23 30 5560

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 155 749 B1 (FAVERO CÉDRICK [FR] ET AL) 26 October 2021 (2021-10-26) * claims * * examples * | 1-15 | INV. C09K8/035 C09K8/588 C09K8/68 C09K8/88 C08F220/34 C08L33/14 |
| A | FR 3 118 049 A1 (SPCM SA [FR]) 24 June 2022 (2022-06-24) * claims * * examples * | 1-15 | |
| A | WO 2020/025992 A1 (SPCM SA [FR]) 6 February 2020 (2020-02-06) * claims 1,15-19, 23-24 * | 1-15 | |
| A | WO 2021/239599 A1 (SPCM SA [FR]) 2 December 2021 (2021-12-02) * claims * | 1-15 | |
| A,D | WO 2017/187150 A1 (INDEPENDENCE OILFIELD CHEMICALS LLC [US]; APPLEDENE LTD [GB]) 2 November 2017 (2017-11-02) * the whole document * | 1-15 | |

TECHNICAL FIELDS
SEARCHED (IPC)

C09K
C08F
C08L

The present search report has been drawn up for all claims

| Place of search | Date of completion of the search | Examiner |
|---|---|---|
| Munich | 4 September 2023 | Zimpfer, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 5560

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2023

| Patent document cited in search report | | | Publication date | Patent family member(s) | | | Publication date |
|---|---|---|---|---|---|---|---|
| US 11155749 | B1 | | 26-10-2021 | AR | 124351 | A1 | 22-03-2023 |
| | | | | AU | 2021277747 | B1 | 24-02-2022 |
| | | | | CA | 3140826 | A1 | 23-06-2022 |
| | | | | CN | 114032081 | A | 11-02-2022 |
| | | | | EP | 4019606 | A2 | 29-06-2022 |
| | | | | FR | 3118049 | A1 | 24-06-2022 |
| | | | | US | 11155749 | B1 | 26-10-2021 |
| FR 3118049 | A1 | | 24-06-2022 | AR | 124351 | A1 | 22-03-2023 |
| | | | | AU | 2021277747 | B1 | 24-02-2022 |
| | | | | CA | 3140826 | A1 | 23-06-2022 |
| | | | | CN | 114032081 | A | 11-02-2022 |
| | | | | EP | 4019606 | A2 | 29-06-2022 |
| | | | | FR | 3118049 | A1 | 24-06-2022 |
| | | | | US | 11155749 | B1 | 26-10-2021 |
| WO 2020025992 | A1 | | 06-02-2020 | AR | 116253 | A1 | 21-04-2021 |
| | | | | CA | 3050540 | A1 | 03-02-2020 |
| | | | | CN | 110791259 | A | 14-02-2020 |
| | | | | EP | 3604351 | A1 | 05-02-2020 |
| | | | | SA | 119400900 | B1 | 28-07-2022 |
| | | | | US | 2020040252 | A1 | 06-02-2020 |
| | | | | WO | 2020025992 | A1 | 06-02-2020 |
| WO 2021239599 | A1 | | 02-12-2021 | CN | 115698223 | A | 03-02-2023 |
| | | | | CO | 2022016853 | A2 | 30-12-2022 |
| | | | | EP | 4157963 | A1 | 05-04-2023 |
| | | | | FR | 3110912 | A1 | 03-12-2021 |
| | | | | US | 2023193115 | A1 | 22-06-2023 |
| | | | | WO | 2021239599 | A1 | 02-12-2021 |
| WO 2017187150 | A1 | | 02-11-2017 | AR | 108316 | A1 | 08-08-2018 |
| | | | | AU | 2017256086 | A1 | 20-09-2018 |
| | | | | BR | 112018072014 | A2 | 12-02-2019 |
| | | | | CA | 3022025 | A1 | 02-11-2017 |
| | | | | CL | 2018003064 | A1 | 04-01-2019 |
| | | | | CN | 109072063 | A | 21-12-2018 |
| | | | | EA | 201892155 | A1 | 31-05-2019 |
| | | | | EP | 3448956 | A1 | 06-03-2019 |
| | | | | PL | 3448956 | T3 | 16-11-2020 |
| | | | | UA | 123365 | C2 | 24-03-2021 |
| | | | | US | 2020181481 | A1 | 11-06-2020 |
| | | | | US | 2021147746 | A1 | 20-05-2021 |
| | | | | WO | 2017187150 | A1 | 02-11-2017 |
| | | | | ZA | 201805805 | B | 27-11-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017187150 A
- US 8186871 B